# FASCICULE DE BREVET EUROPEEN

(11) **EP 1 356 671 B1**
(45) Date de publication et mention de la délivrance du brevet: **06.07.2005**
(21) Numéro de dépôt: 02710970.1
(22) Date de dépôt: 10.01.2002
(51) Int. Cl.: H04N 5/44, H04N 7/20

(54) **SYSTEME DE RECEPTION POUR TELEVISION MULTI-TUNERS PERMETTANT DE CONNECTER AUTOMATIQUEMENT CHAQUE TUNER A AU MOINS UNE ANTENNE, QUEL QUE SOIT LE NOMBRE D'ANTENNES QU'IL COMPORTE**
"EMPFANGSSYSTEM FÜR MEHRFACH-TUNER-FERNSEHEN MIT DER MÖGLICHKEIT DES AUTOMATISCHEN VERBINDENS JEDES TUNERS MIT MINDESTENS EINER ANTENNE, UNGEACHTET DER ANZAHL DARIN ENTHALTENER ANTENNEN"
RECEPTION SYSTEM FOR MULTIPLE-TUNER TELEVISION ENABLING TO AUTOMATICALLY CONNECT EACH TUNER TO AT LEAST AN ANTENNA, WHATEVER THE NUMBER OF ANTENNAE IT COMPRISES

(30) Priorité: 17.01.2001 FR 0100605
(43) Date de publication de la demande: 29.10.2003
(73) Titulaire: Thomson Licensing S.A., 92100 Boulogne-Billancourt (FR)
(72) Inventeur: CRESPEL, Denis, F-35140 Gosné (FR); HARZO, Serge, F-35250 Mouazé (FR); RICHARD, Yves, F-35250 Saint Supplice La Forêt (FR); HORR, Olivier, F-35000 Rennes (FR)
(74) Mandataire: Browaeys, Jean-Philippe
(86) Numéro de dépôt international: PCT/FR2002/000094
(87) Numéro de publication internationale: WO 2002/058381

(56) Documents cités:
- EP-A- 0 314 931
- EP-A- 1 050 920
- EP-A- 1 089 469
- US-A- 5 345 591
- US-A- 5 670 902
- US-A- 6 009 304

## Description

L'inventiqn concerne un système de réception pour télévision comprenant au moins deux tuners dotés chacun d'au moins une entrée et d'une sortie, un premier convertisseur à bas bruit de signal hertzien relié au moins à la première entrée du premier tuner, optionnellement au moins un deuxième convertisseur à bas bruit de signal hertzien, et des moyens pour commuter l'entrée du deuxième tuner au choix vers le deuxième convertisseur ou vers le premier convertisseur.

Un tel système est généralement utilisé pour la réception de programmes de télévision diffusés par satellite.

Dans le cas de la télévision par satellite, les convertisseurs sont généralement appelés « LNB », abréviation du terme anglais « Low Noise Block » ; lorsque le système comporte deux convertisseurs, ils sont en général placés chacun au centre d'une antenne satellite et il y a alors deux antennes ; mais ils peuvent parfois être placés au centre de la même antenne satellite, selon une configuration dite « twin LNB » en langue anglaise.

Le document EP 0314931 (BRIONVEGA) décrit un système comprenant une pluralité de convertisseurs et d'antennes, un seul tuner (« satellite receiver » référencé 21), et des moyens (référencés 29) pour commuter l'entrée de ce tuner au choix vers l'un ou l'autre de la pluralité de convertisseurs (référencés 4, 7).

Dans le cas d'un système exploitant deux convertisseurs et deux tuners, la configuration la plus simple consiste à connecter un convertisseur au premier tuner et l'autre au deuxième tuner ; selon une configuration plus complexe, le premier convertisseur fournit un signal à répartir d'une part en permanence vers le premier tuner et d'autre part optionnellement vers le deuxième tuner, selon la position de ces moyens de commutation ; un tel système comprend alors généralement :
- des moyens de commutation présentant deux positions possibles, l'une pour commuter l'entrée du deuxième tuner vers le deuxième convertisseur comme dans la configuration la plus simple, l'autre pour commuter l'entrée du deuxième tuner vers le premier convertisseur,
- des moyens de répartition (appelés « splitter » en langue anglaise) pour répartir le signal délivré par le premier convertisseur vers deux sorties dont l'une est en permanence reliée à l'entrée du premier tuner, dont l'autre est reliée aux moyens de commutation; ces moyens de répartition sont généralement intégrés au premier tuner, de sorte que ce tuner présente alors, outre l'entrée pour recueillir le signal du premier convertisseur, une sortie pour dupliquer ce signal vers un autre tuner.

Un système à deux tuners tel que décrit ci-dessus peut avoir les applications suivantes :
- il permet au téléspectateur de visualiser un programme de télévision capté par le premier convertisseur et le premier tuner, tout en enregistrant un autre programme de télévision traité par le deuxième tuner ; une telle application est notamment décrite dans la demande de brevet EP300193 ― THOMSON.
- il permet au téléspectateur de visualiser une image principale d'un programme de télévision et d'incruster dans cette image une image secondaire d'un autre programme de télévision ; une telle application est notamment décrite dans la demande de brevet US5557338 ― THOMSON.

Grâce aux moyens de commutation que comporte le système décrit ci-dessus, le système peut donc être utilisé pour recevoir simultanément deux programmes de télévision comme décrit ci-dessus, que ces programmes proviennent de deux sources émettrices différentes via les deux convertisseurs du système, ou que ces programmes proviennent de la même source émettrice via uniquement le premier convertisseur du système :
- dans le premier cas de sources différentes, les moyens de commutation sont actionnés de manière à ce que l'entrée du deuxième tuner soit reliée au deuxième convertisseur,
- dans le deuxième cas où la source est identique, les moyens de commutation sont actionnés de manière à ce que l'entrée du deuxième tuner soit reliée au premier convertisseur via des moyens de répartition de type « splitter » tels que décrits ci-dessus.

Pour ce type d'applications, il est alors nécessaire d'actionner les moyens de commutation du système, selon que les deux programmes proviennent de la même source ou de sources différentes.

Pour actionner les moyens de commutation, on peut se contenter de changer les branchements de l'entrée du second tuner.

Pour éviter cette opération manuelle, on peut également prévoir des moyens de commutation actionnables à distance, par exemple à l'aide d'une télécommande ; de tels moyens de commutation sont décrits (et référencés 29) dans le document EP 0314931 déjà cité et actionnés à distance par le clavier (référencé 23) d'une télécommande (voir colonne 5, lignes 3 à 6).

L'intervention d'un opérateur pour l'actionnement des moyens de commutation présente des inconvénients, liés par exemple au risque d'erreur de manipulation ou à la nécessité, pour l'opérateur, de savoir si les deux programmes sont diffusés ou non par la même source.

L'invention a pour but d'éviter ces inconvénients.

Le document US 6009304 décrit un système comprenant deux convertisseurs à bas bruit de signal hertzien adapté pour délivrer au choix un signal polarisé gauche (« L ») et/ou un signal polarisé droit (« R »); chaque convertisseur comprend un amplificateur à bas bruit (« LNA »), un filtre à bande passante (« BPF »), un mélangeur (« MIX ») pour convertir le signal entrant en un signal de fréquence intermédiaire, et un amplificateur de fréquence intermédiaire (« IF Amp ») ; entre le mélangeur (« MIX ») et l'amplificateur (« IF Amp »), le système comprend des moyens (« S.W. ») pour commuter l'entrée de chaque amplificateur (« IF Amp ») au choix vers la sortie du mélangeur du premier convertisseur ou/et vers la sortie du mélangeur du deuxième convertisseur ; le système comprend des moyens pour piloter les moyens de commutation en fonction de la valeur de tensions appliquées à la sortie des convertisseur (voir revendication 3 + colonne 1, lignes 40 à 60) ; contrairement aux systèmes de réception précédemment décrits, l'état des moyens de commutation est, à ce stade, indépendant de l'état, en service ou pas, des convertisseurs ; le système comprend enfin des moyens adaptés pour mettre hors service l'un ou l'autre des convertisseurs en supprimant l'alimentation de son amplificateur de fréquence intermédiaire (« IF Amp »), lorsqu'on détecte que la sortie de cet amplificateur n'est pas chargée (revendication 1) ; on considère que la sortie d'un amplificateur n'est pas chargée lorsqu'on mesure une tension de 0 V ou inférieure à la tension de pilotage des moyens de commutation (colonne 5, lignes 29 à 35).

Selon ce document, les mêmes moyens de détection servent à piloter des moyens de commutation et des moyens de mise hors service ; les moyens de détection ne sont pas adaptés pour détecter si l'un ou l'autre des convertisseurs est en service ; ainsi, ce document n'enseigne aucune solution de nature à éviter les inconvénient précités.

Pour éviter les inconvénient précités, l'invention a pour objet un système de réception pour télévision comprenant une pluralité de tuners dotés chacun d'au moins une entrée et d'une sortie, au moins un convertisseur à bas bruit de signal hertzien relié à une entrée d'un premier tuner de ladite pluralité, optionnellement au moins un autre convertisseur à bas bruit de signal hertzien, et des moyens pour commuter l'entrée d'au moins un deuxième tuner de ladite pluralité au choix vers un convertisseur qui n'est pas encore relié à un tuner de ladite pluralité ou vers le convertisseur déjà relié au premier tuner, caractérisé en ce qu'il comprend des moyens pour détecter si le convertisseur non encore relié est en service ou n'est pas en service, et des moyens adaptés pour actionner lesdits moyens de commutation de manière à relier ladite entrée du deuxième tuner vers le convertisseur non encore relié lorsque lesdits moyens de détection détectent que ce dernier est en service et à relier ladite entrée du deuxième tuner vers le convertisseur déjà relié au premier tuner lorsque lesdits moyens de détection détectent que le convertisseur non encore relié n'est pas en service.

D'autres caractéristiques avantageuses du système selon l'invention sont définies dans les revendications dépendantes.

L'invention a notamment pour objet un système de réception pour télévision comprenant au moins deux tuners dotés chacun d'au moins une entrée et d'une sortie, un premier convertisseur à bas bruit de signal hertzien relié au moins à la première entrée du premier tuner, optionnellement au moins un deuxième convertisseur à bas bruit de signal hertzien, et des moyens pour commuter l'entrée du deuxième tuner au choix vers le deuxième convertisseur ou vers le premier convertisseur caractérisé en ce qu'il comprend des moyens pour détecter si le deuxième convertisseur est en service ou n'est pas en service, et des moyens adaptés pour actionner lesdits moyens de commutation de manière à relier l'entrée du deuxième tuner vers le deuxième convertisseur lorsqu'on détecte que ce dernier est en service et à relier l'entrée du deuxième tuner vers le premier convertisseur lorsqu'on détecte que ce deuxième convertisseur n'est pas en service.

L'invention peut également présenter une ou plusieurs des caractéristiques suivantes :
- le deuxième convertisseur étant alimenté en courant lorsqu'il est en service, les moyens pour détecter si le deuxième convertisseur est en service ou n'est pas en service reposent sur la détection du courant sur le circuit d'alimentation de ce deuxième convertisseur,
- le système comprend également un microcontrôleur programmable adapté pour contrôler les moyens de commutation intégrant des moyens logiciels adaptés de manière à ce que l'entrée du deuxième tuner soit connectée :
   ■ au deuxième convertisseur si la valeur dudit courant dépasse un seuil prédéterminé,
   ■ au premier convertisseur si la valeur dudit courant est inférieure ou égale audit seuil.

L'invention a également pour objet des procédés de réception de télévision à l'aide d'au moins deux tuners connectables chacun à des moyens de réception aptes à fournir un signal à l'entrée du tuner correspondant, selon les revendications 4 et 5.

L'invention sera mieux comprise à la lecture de la description qui va suivre, donnée à titre d'exemple non limitatif, et en référence aux figures annexées sur lesquelles:
- la figure 1 illustre un système de réception pour télévision selon un premier mode de réalisation de l'invention.
- la figure 2 illustre un mode de réalisation de moyens logiciels aptes à piloter les moyens de commutation du système selon l'invention tel que décrit à la figure 1,
- la figure 3 illustre un système de réception pour télévision selon un deuxième mode de réalisation de l'invention.

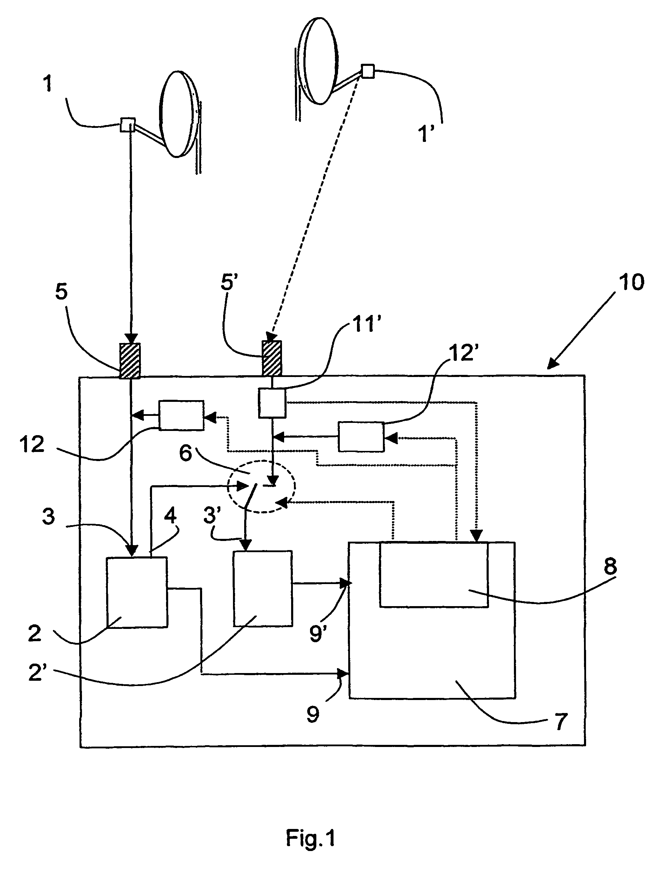

En se reportant à la figure 1, le système de réception pour télévision comprend une première antenne satellite dotée d'un premier convertisseur à bas bruit 1, optionnellement une deuxième antenne satellite dotée d'un deuxième convertisseur à bas bruit 1', et un boîtier 10.

Le boîtier 10 comprend lui-même :
- un premier tuner 2 doté d'une sortie dite « démodulée » et d'une entrée 3 connectée au convertisseur 1 via une prise 5 du boîtier ; ce premier tuner intègre ici des moyens (non représentés) pour répartir le signal d'entrée à la fois vers les circuits de traitement de démodulation propres à ce tuner et vers une sortie dite de « duplication » 4,
- un deuxième tuner 2' doté d'une entrée 3' et d'une sortie dite « démodulée »,
- des moyens 6 pour commuter l'entrée 3' du deuxième tuner 2' au choix vers le deuxième convertisseur 1' via une autre prise 5' du boîtier ou vers la sortie 4 des moyens de répartition intégrés au premier tuner ,
- des moyens de décodage 7 des signaux délivrés par les tuners 2 et 2', pilotés par un microcontrôleur 8 ; ces moyens de décodage, connus en eux-mêmes, ne seront pas décrits plus en détail ; ils sont classiquement dotés d'entrées 9 et 9' reliées chacune à la sortie dite « démodulée » des tuners 2, 2' ; ils sont également dotés de sorties (non représentées) reliées par exemple à des moyens de visualisation et/ou à des moyens d'enregistrement,
- des moyens de contrôle 12 du convertisseur 1 branché à la prise 5 du boîtier et des moyens de contrôle 12' du convertisseur 1' branché optionnellement à l'autre prise 5' du boîtier ; ces moyens de contrôle ont deux fonctions principales :
   ο alimenter chacun des convertisseurs 1, 1',
   ο déterminer, par l'intermédiaire du niveau de tension d'alimentation, le sens de polarisation, droite « R » ou gauche « L », du signal de télévision à recevoir par le convertisseur; une telle fonction est décrite en détail dans le document US 6009304 déjà cité (voir notamment colonne 1) ;

Ces moyens de contrôle 12, 12' sont adaptés pour injecter la tension d'alimentation et de pilotage de chaque convertisseur 1, 1' entre la prise du boîtier 5. 5' de ce convertisseur et, le cas échéant, les moyens de commutation 6 ; ainsi branchés en amont des moyens de commutation 6, ils sont susceptibles d'alimenter ce convertisseur quel que soit l'état de ces moyens de commutation.

Comme illustré à la figure 1, ces moyens de contrôle 12, 12' peuvent être pilotés par le- microcontrôleur 8.

Les signaux radiofréquence issus de chaque convertisseur 1, 1' sont superposés à la tension d'alimentation et de pilotage de ce convertisseur.

Selon l'invention :
- les moyens de commutation 6 sont contrôlables à distance par le microcontrôleur 8,
- le boîtier 10 comporte en outre des moyens de détection de courant 11' qui sont disposés sur le circuit d'alimentation du second convertisseur 1', ici entre les moyens de contrôle 12' et la prise 5', et qui sont adaptés pour délivrer au microcontrôleur 8 des données concernant la valeur l' de ce courant d'alimentation,
- le microcontrôleur 8 intègre des moyens logiciels pour le contrôle des moyens de commutation 6 adaptés de manière à ce que l'entrée 3' du deuxième tuner 2' soit connectée :
   ■ au deuxième convertisseur 1' si la valeur dudit courant dépasse un seuil prédéterminé,
   ■ à la sortie 4 des moyens de répartition intégrés au premier tuner 2, c'est à dire indirectement au premier convertisseur 1, si la valeur dudit courant est inférieure ou égale audit seuil,

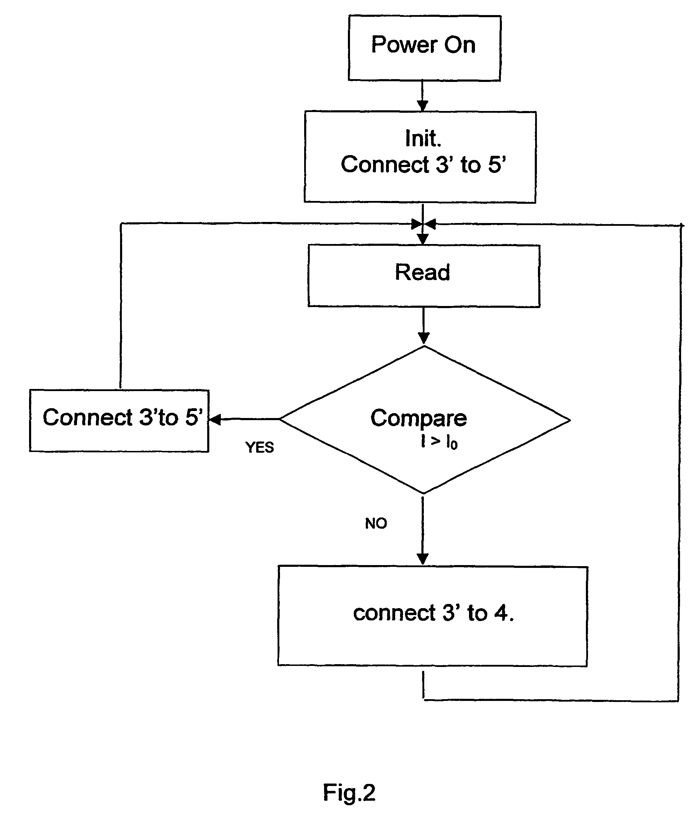

Pour mettre en oeuvre l'invention, ces moyens logiciels peuvent être par exemple implémentés selon le logigramme de la figure 2 :
- dans la première étape appelée « Power On », on met classiquement sous tension le microcontrôleur et les autres composants du boîtier 10, et on active les moyens de contrôle 12 du convertisseur 1 relié à la prise 5,
- dans la deuxième étape appelée « Init », et on initialise l'état des moyens de commutation 6 de manière à ce que la prise 5' du boîtier soit connectée à l'entrée 3' du deuxième tuner 2',
- dans la troisième étape appelée « Read », on active les moyens de contrôle 12' du convertisseur 1' optionnellement relié à la prise 5' et on recueille les données transmises par les moyens de détection de courant 11,
- dans la quatrième étape appelée « compare », on compare la valeur de courant lue l à l'étape précédente à une valeur de seuil prédéterminée l₀; pour un convertisseur classique alimenté classiquement en 12,5 V ou en 17 V selon la polarité verticale ou horizontale du signal de télévision à recevoir, la valeur du courant d'alimentation peut atteindre la valeur maximale de 350 mA environ ; on choisit par exemple comme valeur prédéterminée de seuil environ 10% de cette valeur maximale, soit ici l₀ = 35 mA environ :
   ο si l > l₀, alors la cinquième étape consiste à maintenir ou à restaurer l'état des moyens de commutation 6 de manière à ce que la prise 5' du boîtier soit connectée à l'entrée 3' du tuner 2' ;
   ο si l ≤ l₀, alors la cinquième étape consiste à établir l'état des moyens de commutation 6 de manière à ce que la sortie 4 des moyens de répartition intégrés au premier tuner 1 soit connectée à l'entrée 3' du deuxième tuner 2' ; de préférence, dans ce cas, on désactive les moyens de contrôle 12', pour limiter la consommation énergétique et pour éviter tout risque de court-circuit au niveau de la prise 5' ;
- à l'issue de la cinquième étape, on reboucle sur la troisième étape précédemment décrite appelée « Read » ; la cadence de bouclage peut être réglée d'une manière connue en elle-même en fonction de la cadence souhaitée de mise à jour de l'état des moyens de commutation 6.

Ainsi, grâce à l'invention, le tuner 2' est :
- soit relié au deuxième convertisseur 1' lorsqu'on détecte un courant d'alimentation de ce convertisseur via la prise 5', c'est à dire lorsque le deuxième convertisseur 1' est en service, c'est à dire est branché à la prise 5' du boîtier 10,
- soit relié au premier convertisseur 1 via le tuner 2, lorsqu'on ne détecte pas de courant d'alimentation via la prise 5', c'est à dire lorsque le deuxième convertisseur 1' n'est pas en service, c'est à dire n'est pas branché à cette prise du boîtier 10.

Ainsi, grâce à l'invention, les deux tuners sont toujours opérationnels et connectés à une source sans qu'aucune intervention du téléspectateur ne soit plus nécessaire, qu'une seule ou deux sources soient connectées au boîtier 10 ; lorsqu'une seule source est connectée via la prise 5, les deux tuners sont reliés à cette unique source ; lorsque deux sources sont connectées, chaque tuner est relié à une source.

Selon une variante concernant les composants du boîtier 10, les moyens de répartition du signal délivré par le premier convertisseur sont extérieurs au tuner 1 ; des tels moyens sont appelés « splitter » en langue anglaise.

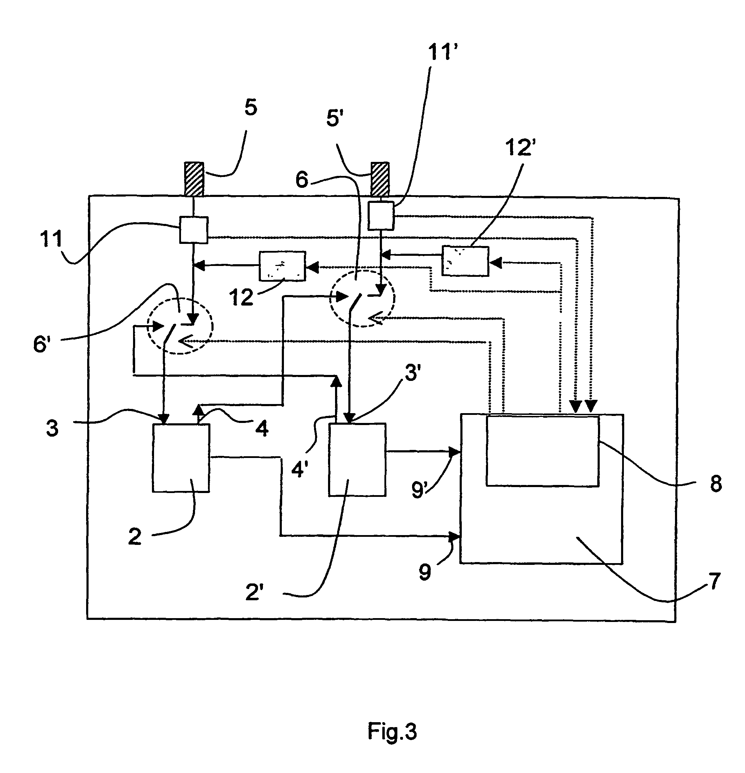

Selon un autre mode de réalisation de l'invention décrit à la figure 3, où le système comprend toujours deux tuners 2 et 2' ici dotés chacun d'une sortie dite de « duplication » 4, 4', outre les éléments décrits ci-dessus, le système comprend :
- des moyens de commutation 6' qui permettent de connecter l'entrée 3 du premier tuner 2 au choix au premier convertisseur 1 via la prise 5 ou au deuxième convertisseur 1' via la prise 5' ; les moyens de contrôle 12 du convertisseur 1 branchés en amont des moyens de commutation 6' de manière à pouvoir alimenter ce convertisseur quel que soit l'état de ces moyens de commutation.
- des moyens de détection de courant 11 sur le circuit d'alimentation du premier convertisseur 1, positionnés entre les moyens de contrôle 12 et la prise 5 du boîtier 10, et adaptés pour délivrer au microcontrôleur 8 des données concernant la valeur l' dudit courant,
- le microcontrôleur 8 intègre des moyens logiciels pour le contrôle des moyens de commutation 6' adaptés de manière à ce que l'entrée 3 du premier tuner 2 soit connectée :
   ■ au premier convertisseur 1 si la valeur dudit courant l' dépasse un seuil prédéterminé,
   ■ à la sortie 4' de moyens de répartition intégrés au deuxième tuner 2', c'est à dire indirectement au deuxième convertisseur 1', si la valeur dudit courant est inférieure ou égale audit seuil.

L'avantage de cette variante est que, le système étant parfaitement symétrique, lorsqu'une seule source ou un seul convertisseur est connecté au boîtier, on obtient les avantages de l'invention quelle que soit la prise 5, 5' à laquelle est connectée ce convertisseur.

L'invention s'applique également à des systèmes de réception de télévision comprenant plus de deux tuners, par exemple n tuners ; le boîtier comprend alors n prises d'entrée connectables à une antenne, plus précisément à un convertisseur (car il peut y avoir plusieurs convertisseurs pour la même antenne) ; à l'intérieur du boîtier, des moyens de commutation adaptés permettent de relier au choix au moins un des tuners, voir chaque tuner, soit à la prise qui lui correspond quand elle est connectée à un convertisseur et que ce convertisseur est en service, soit, dans le cas contraire, à une autre prise correspondant à un autre tuner du moment que cette prise est elle-même connectée à un convertisseur en service, de sorte que, grâce à l'invention, tous les tuners du boîtier sont connectés en permanence à des convertisseurs en service et peuvent être utilisés simultanément pour la visualisation ou l'enregistrement de programmes de télévision différents.

Ainsi, quelque soit le nombre d'antennes que comporte le système de réception ― ce nombre étant inférieur ou égal au nombre de tuners ― le système selon l'invention permet de connecter automatiquement chacun des tuners à au moins une antenne, sans nécessiter l'intervention d'un opérateur, sans risque d'erreur de connexion, et sans nécessité de savoir si différents programmes sont diffusés ou non par la même source.

Dans la description ci-dessous, la détection de la mise en service ou non d'un convertisseur repose sur la mesure de courant, en amont des moyens de contrôle 12, 12', dans la ligne radiofréquence reliant la prise 5, 5' susceptible d'être connectée à ce convertisseur aux moyens de commutation 11, 11' ; sans se départir de l'invention, cette même mesure de courant pourrait être intégrée aux moyens de contrôle 12, 12' eux-mêmes.

Enfin, sans se départir de l'invention, d'autres moyens que la mesure de courant débitée par l'alimentation des convertisseurs peuvent être utilisés pour détecter si un convertisseur non encore relié est en service ou non.

## Revendications

1. Système de réception pour télévision comprenant une pluralité de tuners (2, 2') dotés chacun d'au moins une entrée (3, 3') et d'une sortie, au moins un convertisseur à bas bruit de signal hertzien (1) relié à une entrée (3) d'un premier tuner (2) de ladite pluralité, optionnellement au moins un autre convertisseur à bas bruit de signal hertzien (1'), et des moyens (6) pour commuter l'entrée (3') d'au moins un deuxième tuner (2') de ladite pluralité au choix vers un convertisseur (1') qui n'est pas encore relié à un tuner de ladite pluralité ou vers leconvertisseur (1) déjà relié au premier tuner (2), **caractérisé en ce qu'**il comprend des moyens (11') pour détecter si le convertisseur (1') non encore relié est en service ou n'est pas en service, et des moyens adaptés pour actionner lesdits moyens de commutation (6) de manière à relier ladite entrée (3') du deuxième tuner (2') vers le convertisseur (1') non encore relié lorsque lesdits moyens de détection (11') détectent que ce dernier est en service et à relier ladite entrée (3') du deuxième tuner (2') vers le convertisseur (1) déjà relié au premier tuner (2) lorsque lesdits moyens de détection (11') détectent que le convertisseur (1') non encore relié n'est pas en service.

2. Système selon la revendication 1, **caractérisé en ce que**, le convertisseur (1') non encore relié étant alimenté en courant lorsqu'il est en service, les moyens (11') pour détecter si ce convertisseur est en service ou n'est pas en service reposent sur la détection d'un courant sur le circuit d'alimentation de ce convertisseur (1').

3. Système selon la revendication 2 **caractérisé en ce qu'**il comprend un microcontrôleur programmable (8) adapté pour contrôler les moyens de commutation (6) intégrant des moyens logiciels adaptés de manière à ce que l'entrée (3') du deuxième tuner (2') soit connectée :
■ au convertisseur non encore relié (1') si la valeur dudit courant détecté dépasse un seuil prédéterminé,
■ au convertisseur déjà relié (1) si la valeur dudit courant détecté est inférieure ou égale audit seuil.

4. Procédé de réception de télévision à l'aide d'au moins deux tuners connectables chacun à des moyens de réception aptes à fournir un signal à l'entrée du tuner correspondant, qui peuvent être indépendamment des autres mis en service ou hors service, **caractérisé en ce qu'**il comprend les étapes consistant à, pour au moins l'un des tuners,
- détecter si lesdits moyens de réception correspondant au dit tuner sont en service, et,
- dans le cas où l'on détecte que lesdits moyens de réception sont en service, connecter ledit tuner à ces moyens de réception,
- dans le cas où l'on détecte que lesdits moyens de réception ne sont pas en service, connecter ledit tuner à d'autres moyens de réception déjà connectés à un autre tuner et aptes à fournir un signal à l'entrée dudit tuner.

5. Procédé de réception de télévision selon la revendication 4 où chacun desdits moyens de réception nécessitent, lorsqu'ils sont en service, une alimentation électrique débitant un courant supérieur à une valeur prédéterminée de seuil, **caractérisé en ce qu'**on détecte si des moyens de réception sont en service en comparant la valeur de courant débitée par ladite alimentation électrique à ladite valeur de seuil.

## Patentansprüche

1. Fernseh-Empfangssystem mit mehreren Tunern (2, 2'), von denen jeder mit wenigstens einem Eingang (3, 3') und einem Ausgang versehen ist, wenigstens einem rauscharmen HF-Converter (1), der mit einem Eingang eines ersten Tuners (2) der mehreren Tuner verbunden ist, optional wenigstens einem weiteren rauscharmen Converter (1') und Mitteln (6) zur wahlweisen Umschaltung des Eingangs (3') wenigstens eines der zweiten Tuner (2') der mehreren Tuner zu einem Converter (1'), der noch nicht mit einem Tuner der mehreren Tuner über den Converter (1) mit einem Tuner (2) verbunden ist,
**gekennzeichnet durch**
Mittel (11') zur Detektierung, ob der noch nicht angeschlossene Converter (1') in Betrieb oder nicht in Betrieb ist, und Mittel zur Betätigung der Schaltmittel (6) derart, dass der Eingang (3') des Tuners (2') mit dem noch nicht angeschlossenen Converter (1') verbunden ist mit Mitteln zur Betätigung dieser Umschaltmittel derart, dass der Eingang (3') des zweiten Tuners (2') mit dem Converter (1') verbunden ist, wenn die Detektiermittel (11') detektieren, dass letzterer in Betrieb ist, und zur Verbindung des Eingangs (3') des zweiten Tuners (2') mit dem Converter (1) verbunden ist, der bereits mit einem anderen Tuner (2) verbunden ist, wenn die Detektiermittel (11') detektieren, dass der noch nicht angeschlossene Converter (1') nicht in Betrieb ist.

2. System nach Anspruch 1, **dadurch gekennzeichnet, dass** der noch nicht angeschlossene Converter (1') mit Strom versorgt wird, wenn er in Betrieb ist, die Mittel (11') zur Detektierung, ob dieser Converter in Betrieb oder nicht in Betrieb ist, auf der Detektion eines Stroms auf der Versorgungsschaltung dieses Converters (1') beruhen.

3. System nach Anspruch 2, **gekennzeichnet durch** einen programmierbaren Microcontroller (8) zur Steuerung der Schaltmittel (6) mit den Softwaremitteln, derart, dass der Eingang (3') des zweiten Tuners (2') verbunden ist mit:
• dem noch nicht angeschlossenen Converter (1'), wenn der Wert des detektierten Stroms einen vorbestimmten Schwellwert übersteigt,
• mit dem bereits angeschlossenen Converter (1), wenn der Wert des detektierten Stroms kleiner oder gleich dem Schwellwert ist.

4. Verfahren zum Fernsehempfang mit Hilfe von wenigstens zwei Tunern, von denen jeder mit Empfangsmitteln verbunden ist, wobei die Empfangsmittel dazu bestimmt sind, ein Signal zu bilden, um den Eingang des jeweiligen Tuners zu versorgen , wobei die Empfangsmittel unabhängig von einander in Betrieb oder nicht in Betrieb sein können, **gekennzeichnet durch** die folgenden Schritte für wenigstens einen der Tuner,
- Detektion, ob die Empfangsmittel für den Tuner in Betrieb sind, und,
- in dem Fall, wo detektiert wird, dass die Empfangsmittel in Betrieb sind, Verbinden des Tuners mit diesen Empfangsmitteln,
- in dem Fall, wo detektiert wird, dass die Empfangsmittel nicht in Betrieb sind, Verbindung des Tuners mit anderen Empfangsmitteln , die bereits an einen anderen Tuner angeschlossen sind und den Tuner mit einem Signal versorgen können.

5. Verfahren zum Femsehempfang nach Anspruch 4, wobei jedes Empfangsmittel, wenn es in Betrieb ist, eine elektrische Versorgung mit einem Strom oberhalb eines bestimmten Schwellwerts benötigt, **dadurch gekennzeichnet, dass** detektiert wird, ob die Empfangsmiftelin Betrieb sind, in dem ein Vergleich zwischen dem Wert des Stroms, der durch die Betriebsspannungsquelle erzeugt wird und dem Schwellwert durchgeführt wird.

## Claims

1. Reception system for television comprising a plurality of tuners (2, 2') each furnished with at least one input (3, 3') and one output, at least one RF low signal noise converter (1) linked to an input (3) of a first tuner (2) of said plurality, optionally at least one other RF low signal noise converter (1'), and means (6) for switching the input (3') of at least one second tuner (2') of said plurality by choice over to a converter (1') which is not yet linked to a tuner of said plurality or over to the converter (1) already linked to the first tuner (2), **characterized in that** it comprises means (11') for detecting whether the converter (1') not yet linked is in service or is not in service, and means suitable for actuating said switching means (6) in such a way as to link said input (3') of the second tuner (2') to the not yet linked converter (1') when said detection means (11') detect that the latter is in service and to link said input (3') of the second tuner (2') to the converter (1) already linked to the first tuner (2) when said detection means (11') detect that the converter (1') not yet linked is not in service.

2. System according to Claim 1, **characterized in that**, the not yet linked converter (1') being supplied with current when it is in service, the means (11') for detecting whether this converter is in service or is not in service rely on the detection of a current on the supply circuit of this converter (1').

3. System according to Claim 2, **characterized in that** it comprises a programmable microcontroller (8) suitable for controlling the switching means (6) incorporating software means adapted in such a way that the input (3') of the second tuner (2') is connected:
■ to the not yet linked converter (1') if the value of said detected current exceeds a predetermined threshold,
■ to the already linked converter (1) if the value of said detected current is less than or equal to said threshold.

4. Process for television reception with the aid of at least two tuners each connectable to reception means that are able to deliver a signal to the input of the corresponding tuner, which may be placed in service or out of service independently of the others, **characterized in that** it comprises the steps consisting in, for at least one of the tuners,
- detecting whether said reception means corresponding to said tuner are in service, and,
- in the case where one detects that said reception means are in service, connecting said tuner to these reception means,
- in the case where one detects that said reception means are not in service, connecting said tuner to other reception means already connected to another tuner and able to deliver a signal to the input of said tuner.

5. Process for television reception according to Claim 4, in which each of the reception means requires, when they are in service, a power supply producing a current greater than a predetermined threshold value, **characterized in that** one detects whether reception means are in service by comparing the value of current produced by said power supply with said threshold value.
